# EUROPEAN PATENT SPECIFICATION

(11) **EP 3 001 490 B1**
(45) Date of publication and mention of the grant of the patent: **26.06.2019**
(21) Application number: 14800441.9
(22) Date of filing: 07.05.2014
(51) Int. Cl.: H01M 8/04828, H01M 8/04992, H01M 8/0432, H01M 8/04537, H01M 8/04858, H02M 7/48, H02J 1/00, H01M 8/0612

(54) **FUEL CELL SYSTEM AND METHOD FOR CONTROLLING INPUT OF INVERTER AND FUEL CELL**
BRENNSTOFFZELLENSYSTEM UND VERFAHREN ZUR REGELUNG EINES WECHSELRICHTEREINGANGS UND BRENNSTOFFZELLE
SYSTÈME DE PILE À COMBUSTIBLE ET PROCÉDÉ PERMETTANT DE COMMANDER L'ENTRÉE D'UN ONDULEUR ET UNE PILE À COMBUSTIBLE

(30) Priority: 21.05.2013 KR 20130057264
(43) Date of publication of application: 30.03.2016
(73) Proprietor: KyungDong Electronics Co., Ltd., Gyeonggi-do 17704 (KR)
(72) Inventor: HWANG, Gye Ho, Seongnam-si Gyeonggi-do 463-827 (KR)
(74) Representative: reuteler & cie SA
(86) International application number: PCT/KR2014/004038
(87) International publication number: WO 2014/189218

(56) References cited:
- EP-A1- 2 533 337
- JP-A- 2000 012 059
- JP-A- 2007 242 330
- JP-A- 2010 004 600
- JP-A- 2010 010 050
- JP-A- 2010 108 807
- KR-A- 20110 076 534
- KR-A- 20110 097 020
- US-A- 5 637 414

## Description

### [Technical Field]

The present invention relates to a fuel cell system and a method for controlling input of an inverter and a fuel cell, and more particularly, to a fuel cell system in which configuration of a system controller and an inverter having a superior-subordinate relationship is changed to configuration in which a system controller and a converter controller inside an inverter share multiple parameters to allow the inverter to actively respond to the fuel cell system, and a method for controlling input of an inverter and a fuel cell.

### [Background Art]

Korean Patent Laid-Open Publication No. 10-2010-0036022 "Power Control Method of Fuel Cell and Fuel Cell System Thereof" discloses that "three or more fuel cells, that is, first to third fuel cells 30, 40, and 50 are provided. A power converter 60 for converting direct current (DC) power supplied from each of the first to third fuel cells 30, 40, and 50 into alternating current (AC) power to supply the AC power to a power grid, is provided. The power converter 60 serves to sense output voltage of the first to third fuel cells. According to the sensing result, it is determined whether the output voltage of the first to third fuel cells 30, 40, and 50 corresponds to normal voltage, minimum voltage, or threshold voltage. When the output voltages of all the first to third fuel cells 30, 40, and 50 all correspond to normal voltage, output power of the first to third fuel cells 30, 40, and 50 is uniformly controlled to be supplied as required load power of the power grid. However, when output voltage of at least one of the first to third fuel cells 30, 40, and 50 is sensed as corresponding to the minimum voltage, output power of the first to third fuel cells 30, 40, and 50 is output in a predetermined level which is programmed in advance. Further, when output voltage of at least one of the first to third fuel cells 30, 40, and 50 is sensed as corresponding to the threshold voltage, power of the fuel cell outputting threshold voltage is controlled not to be output. In some cases, the output power of the fuel cell outputting the minimum voltage or the threshold voltage is maintained as it is, and the rest of the fuel cells are controlled to output the power while compensating for the required load power. According to the present invention, the required load power may be stably supplied according to a state of output voltage of a plurality of fuel cells, thereby preventing the fuel cell damage and improving efficiency of the overall system operation."

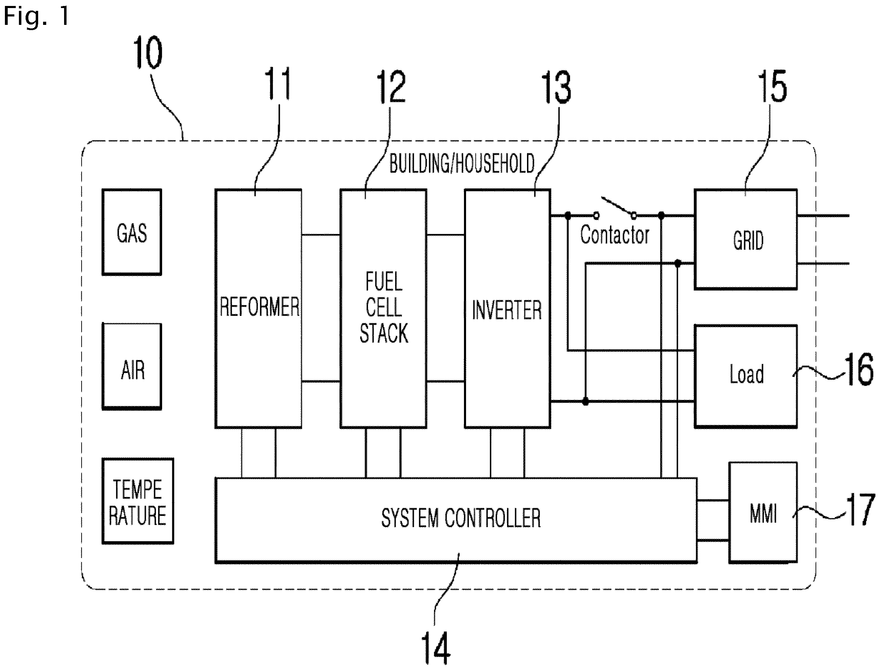

As shown in FIG. 1, illustrating an example of the related art, a fuel cell system 10 includes a reformer 11, a fuel cell stack 12, an inverter 13, a system controller 14, a grid 15, a load 16, and a man machine interface (MMI) 17.

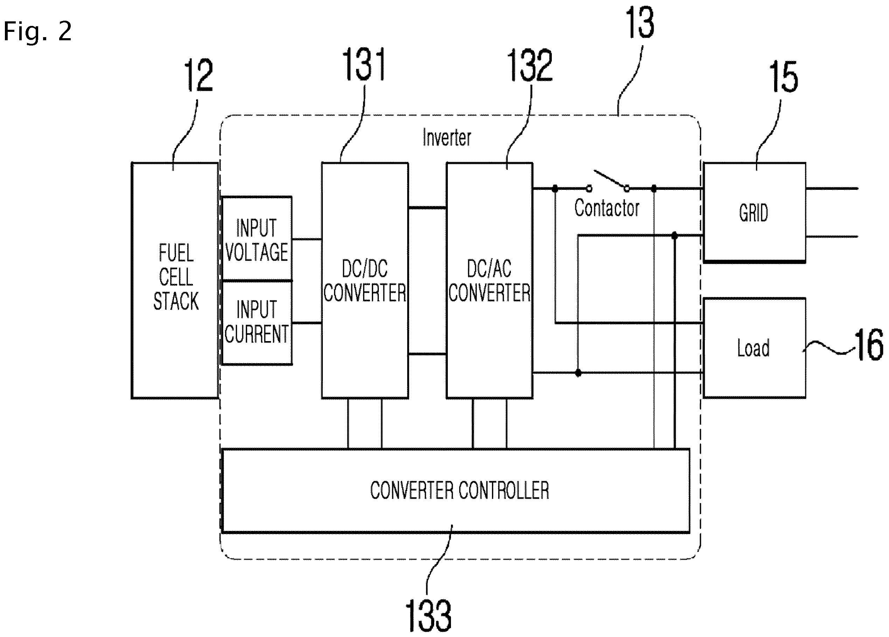

As shown in FIG. 2, the inverter 13 includes a DC/DC converter 131, a DC/AC converter 132, and a converter controller 133.

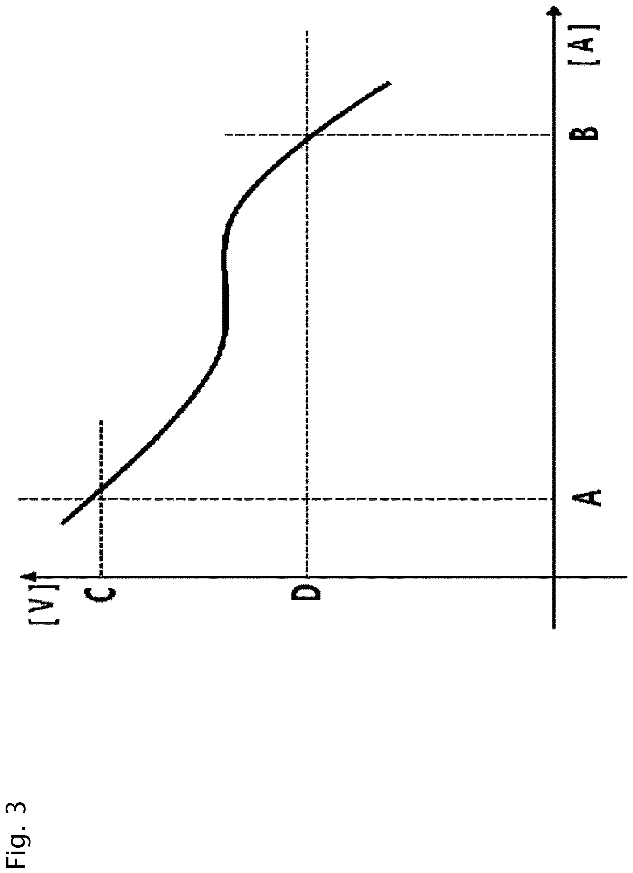

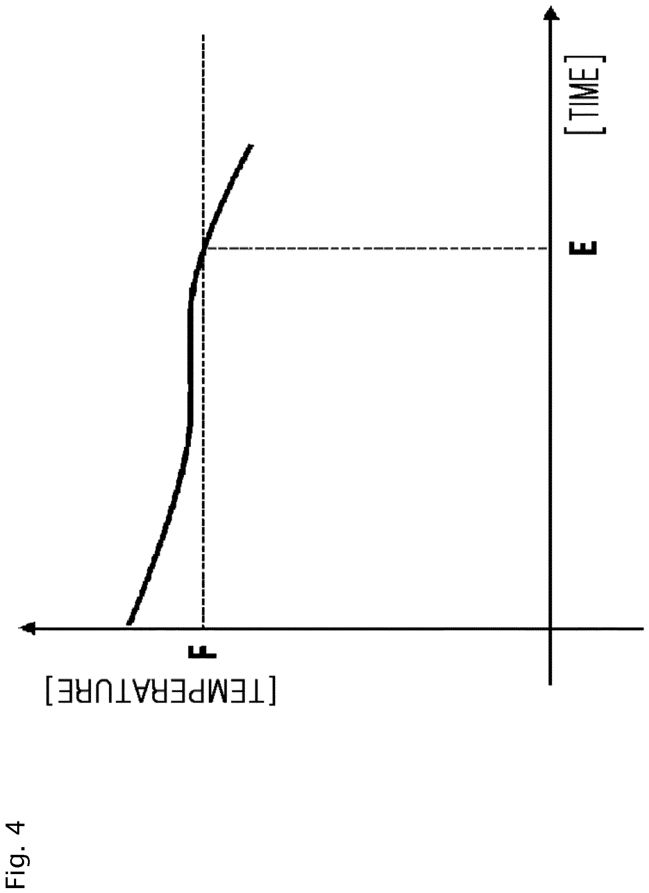

As shown in FIGS. 3 and 4, the converter controller 133 is operated or not operated according to on/off of the system controller 14, and is operated after receiving turn-on command from the system controller 14, only in a voltage range (between C and D), and a current range (between A and B). The system controller 14 necessarily turns off the inverter when a temperature which is one of multiple parameters is decreased below a reference temperature F. Other examples of fuel cell system controls are described in EP2533337 and US5637414.

### [Disclosure]

### [Technical Problem]

However, in the fuel cell system according to the related art, the system controller and the inverter have a superior-subordinate relationship in the fuel cell. The fuel cell system according to the related art has a structure in which the system controller transfers and gives only the turn-on/off command to the inverter, and gives a turn-off command to the inverter when a temperature which is one of multiple parameters, is decreased below a reference temperature F in consideration of only a state of the fuel cell system but regardless of a state of the inverter. Due to such structure, so much time is required to restart a fuel cell stack, and the inverter is forced to be turned off even in a case in which a temperature, voltage, and current conditions are not met, that is, an unreasonable control is exercised.

Further, there has been a problem in that the converter controller inside the inverter is operated or not operated according to on/off of the system controller, and is operated to control the operation of the inverter after receiving a turn-on command from the system controller, only in a voltage range, and a current range.

An object of the present invention is to provide a fuel cell system in which configuration of the system controller and the inverter having a superior-subordinate relationship is changed to configuration in which a system controller and a converter controller inside an inverter share multiple parameters to allow the inverter to actively respond to the fuel cell system, and a method for controlling input of an inverter and a fuel cell.

### [Technical Solution]

The present invention relates to a fuel cell system in which the system controller and the converter controller inside the inverter do not have a superior-subordinate relationship but share information on on/off of the system controller and multiple parameters so that an operable state of the inverter or the converter may be actively controlled. Objects of the invention are achieved by a fuel cell system according to clam 1 and a method for controlling input of an inverter and a fuel cell according to claim 2. Dependent claims set forth various advantageous features of the invention.

In accordance with one aspect of the present invention, a fuel cell system includes: a reformer 11 reforming air and gas supplied thereto into hydrogen gas; a fuel cell stack 12 in which a plurality of cells are stacked, the plurality of cells including a pair of anode and cathode, respectively; an inverter 13 converting direct current to alternating current; a system controller 24 controlling the overall fuel cell system 20; a grid 15 outputting the alternating current converted in the inverter 13 to the outside; a load 16 directly receiving and consuming the alternating current converted in the inverter 13; and a man machine interface (MMI) 17 which is an interface connected to the system controller 24 to receive setting from a user, wherein the inverter includes a converter controller therein, and the system controller controlling the fuel cell system and the converter controller controlling the inverter control components which have a subordinate relationship thereto, respectively, are connected to each other,and share multiple parameter information including on/off, a temperature, gas, and air, the system controller performing control based on a state of the inverter, and the converter controller performing control based on a state of the fuel cell system.

In accordance with another aspect of the present invention, a method for controlling input of an inverter and a fuel cell includes: transferring, by a system controller, a control command to the inverter based on inverter on/off, temperature, time parameters (S1); determining whether the inverter is turned on (S2); determining whether a temperature is in a temperature range between minimum and maximum temperatures when the inverter is in a turned on state (S3); normally operating the inverter when the inverter is turned on and the temperature is in the temperature range between the minimum and maximum temperatures (S4); determining whether voltage is in a normal range (S5); determining whether current is in a normal range (S6); normally operating the inverter when voltage and current are normal (S7); and determining whether multiple parameters including air, gas, and a temperature are in a normal range (S8).

The method may further include: determining whether the temperature is in a normal range when the inverter is in a turned off state in the determining (S2) (S9); displaying a voltage error on a screen when the voltage is not in the normal range in the determining (S5) (S10); displaying a current error on the screen when the current is not in the normal range in the determining (S6) (S11); and displaying a parameter error on the screen when the parameters are not in the normal range in determining (S8) (S12).

The method may further include: stopping the inverter when the temperature is not in the normal range in the determining (S9) (S13); and entering the inverter in a standby state when the temperature is in the normal range in the determining (S9) or the temperature is not in the normal range in the determining (S3) (S14).

The method may further include: checking a state of the inverter when the temperature is not in the normal range in the determining (S9) or after the entering (S14) (S15); and checking, periodically, the state of the inverter after the checking (S15) (S16), wherein the checking step (S16) is branched to the determining (S2).

### [Advantageous Effects]

According to the exemplary embodiments of the present invention, it is possible to improve system efficiency through system integration configuration by providing a fuel cell system in which configuration of a system controller and an inverter having a superior-subordinate relationship is changed to configuration in which a system controller and a converter controller inside an inverter share multiple parameters to allow the inverter to actively respond to the fuel cell system, and a method for controlling input of an inverter and a fuel cell.

### [Description of Drawings]

FIG. 1 is a block diagram illustrating configuration of a fuel cell system according to the related art.
FIG. 2 is a block diagram illustrating configuration of an inverter according to the related art.
FIG. 3 is a graph describing an operation range of a converter controller according to the related art.
FIG. 4 is a graph describing an operation range of a system controller according to the related art.
FIG. 5 is a block diagram illustrating configuration of a fuel cell system according to an exemplary embodiment of the present invention.
FIG. 6 is a flow chart describing a method for controlling input of an inverter and a fuel cell according to an exemplary embodiment of the present invention.

### [Best Mode]

Hereinafter, the present invention will be described in more detail with reference to the accompanying drawings.

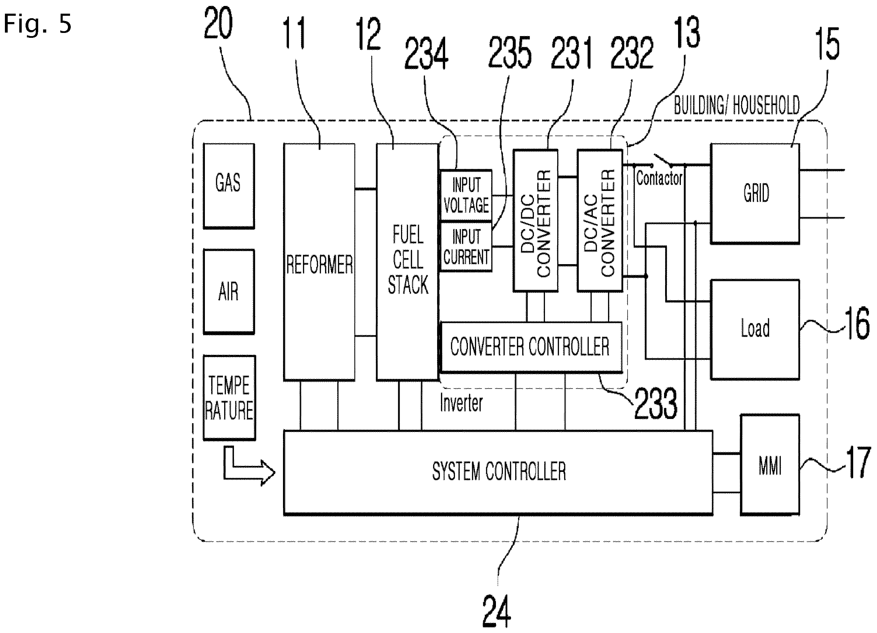

FIG. 5 illustrates configuration of a fuel cell system according to an exemplary embodiment of the present invention.

Referring to FIG. 5, the fuel cell system according to an exemplary embodiment of the present invention is designed to be applicable in buildings or houses.

The fuel cell system includes a reformer 11 reforming air and gas supplied thereto into hydrogen gas, a fuel cell stack 12 in which a plurality of cells are stacked, the plurality of cells including a pair of anode and cathode, respectively, an inverter 13 converting direct current to alternating current, and a system controller 24 controlling the overall fuel cell system 20 by using parameters such as a temperature, gas, air, and the like.

The fuel cell system includes a grid 15 for outputting the alternating current converted in the inverter 13 to the outside, a load 16 directly receiving and consuming the alternating current converted in the inverter 13, and a man machine interface (MMI) 17 which is an interface connected to the system controller 24 to receive setting from a user.

The fuel cell system includes an input voltage detecting means 234 for detecting a level of input voltage transferred from the fuel cell stack 12, and an input current detecting means 235 for detecting a level of input current.

The converter controller 233 inside the inverter 13 controls the inverter 13 using parameters such as input voltage, input current, etc. of the fuel cell stack 12. In order to change configuration in which the inverter has a subordinate relationship to the system controller, to configuration in which the inverter may be actively driven, the system controller 24 shares information (multiple parameters such as gas, air, temperature, and the like) of the system controller 24 with the converter controller 233 inside the inverter 13, and the converter controller 233 inside the inverter 13 is configured to determine whether to enter the inverter 13 in a standby mode, or to operate the inverter 13, or not to operate the inverter 13, based on the shared information, so as to rapidly control the inverter 13 according to the determination result to thereby correspond to the fuel cell system.

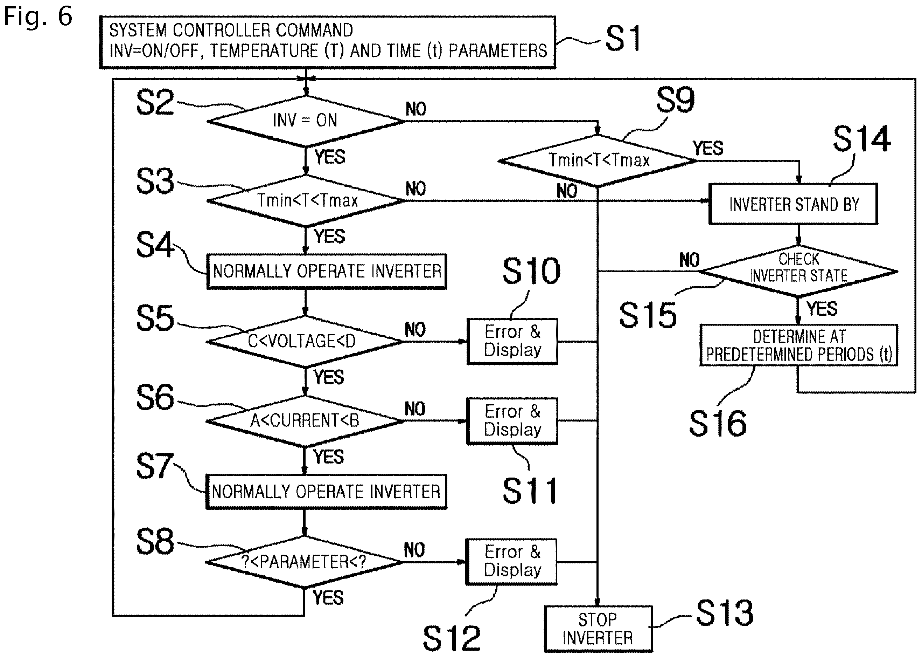

Referring to FIG. 6, based on such configuration, a method for controlling input of an inverter and a fuel cell will be described in more detail.

As illustrated in FIG. 6, a step of transferring, by the system controller, a control command to the inverter based on inverter on/off, temperature, time parameters (S1) is performed.

A step of determining whether the inverter is turned on (S2), and a step of determining whether temperature is in a temperature range between minimum and maximum temperatures when the inverter is in a turned on state (S3) are performed.

A step of normally operating the inverter when the inverter is turned on and the temperature is in the temperature range between the minimum and maximum temperatures (S4) is performed.

A step of determining whether voltage is in a normal range (S5), and a step of determining whether current is in a normal range (S6) are sequentially performed.

A step of normally operating the inverter when voltage and current are normal (S7) is performed, and a step of determining whether multiple parameters including air, gas, and temperature are in a normal range (S8) is performed.

A step of determining whether the temperature is in a normal range when the inverter is in a turned off state in the determining (S2) (S9) is performed, and a step of displaying a voltage error on a screen when the voltage is not in the normal range in the determining (S5) (S10) is performed.

A step of displaying a current error on the screen when the current is not in the normal range in the determining (S6) (S11) is performed, and a step of displaying a parameter error on the screen when the parameters are not in the normal range in determining (S8) (S12) is performed.

A step of stopping the inverter when the temperature is not in the normal range in the determining (S9) (S13) is performed, and a step of entering the inverter in a standby state when the temperature is in the normal range in the determining (S9) or the temperature is not in the normal range in the determining (S3) (S14) is performed.

A step of checking a state of the inverter when the temperature is not in the normal range in the determining (S9) or after the entering (S14) (S15) is performed, a step of checking, periodically, the state of the inverter after the checking (S15) (S16) is performed, and the checking step (S16) is branched to the determining (S2).

### [Detailed Description of Main Elements]

- 11:: Reformer
- 12:: Fuel cell stack
- 15:: Grid
- 16:: Load
- 17:: Man machine interface (MMI)
- 20:: Fuel cell system
- 24:: System controller
- 231:: DC/DC converter
- 232:: DC/AC converter
- 233:: Converter controller
- 234:: Input voltage detecting means
- 235:: Input current detecting means

## Claims

1. A fuel cell system comprising:
a reformer 11 reforming air and gas supplied thereto into hydrogen gas; a fuel cell stack 12 in which a plurality of cells are stacked, the plurality of cells including a pair of anode and cathode, respectively; an inverter 13 converting direct current to alternating current; a system controller 24 controlling the overall fuel cell system 20; a grid 15 outputting the alternating current converted in the inverter 13 to the outside; a load 16 directly receiving and consuming the alternating current converted in the inverter 13; a man machine interface (MMI) 17 which is an interface connected to the system controller 24 to receive setting from a user; an input voltage detecting means 234 for detecting a level of input voltage transferred from the fuel cell stack 12 to the inverter; and an input current detecting means 235 for detecting a level of input current to the inverter, wherein the inverter includes a converter controller therein, and the system controller controlling the fuel cell system and the converter controller controlling the inverter control components which have a subordinate relationship thereto, respectively, are connected to each other, and share multiple parameter information including on/off, a temperature, gas, and air, the system controller performing control based on a state of the inverter, and the converter controller performing control based on a state of the fuel cell system.

2. A method for controlling input of an inverter and a fuel cell using a reformer 11 reforming air and gas supplied thereto into hydrogen gas, a fuel cell stack 12 in which a plurality of cells are stacked, the plurality of cells including a pair of anode and cathode, respectively, an inverter 13 converting direct current to alternating current, a system controller 24 controlling the overall fuel cell system 20, a grid 15 outputting the alternating current converted in the inverter 13 to the outside, a load 16 directly receiving and consuming the alternating current converted in the inverter 13, a man machine interface (MMI) 17 which is an interface connected to the system controller 24 to receive setting from a user, an input voltage detecting means 234 for detecting a level of input voltage transferred from the fuel cell stack 12 to the inverter, and an input current detecting means 235 for detecting a level of input current to the inverter, the method comprising:
transferring, by the system controller, a control command to the inverter based on inverter on/off, a temperature, time parameters (S1); determining whether the inverter is turned on (S2); determining whether a temperature is in a temperature range between minimum and maximum temperatures when the inverter is in a turned on state (S3); normally operating the inverter when the inverter is turned on and the temperature is in the temperature range between the minimum and maximum temperatures (S4); determining whether voltage is in a normal range (S5); determining whether current is in a normal range (S6); normally operating the inverter when voltage and current are normal (S7); and determining whether multiple parameters including air, gas, and a temperature are in a normal range (S8) .

3. The method of claim 2, further comprising:
determining whether the temperature is in a normal range when the inverter is in a turned off state in the determining (S2) (S9) ;
displaying a voltage error on a screen when the voltage is not in the normal range in the determining (S5) (S10);
displaying a current error on the screen when the current is not in the normal range in the determining (S6) (S11); and
displaying a parameter error on the screen when the parameters are not in the normal range in determining (S8) (S12).

4. The method of claim 3, further comprising:
stopping the inverter when the temperature is not in the normal range in the determining (S9) (S13); and
entering the inverter in a standby state when the temperature is in the normal range in the determining (S9) or the temperature is not in the normal range in the determining (S3) (S14).

5. The method of claim 4, further comprising:
checking a state of the inverter when the temperature is not in the normal range in the determining (S9) or after the entering (S14) (S15); and
checking, periodically, the state of the inverter after the checking (S15) (S16), wherein the checking step (S16) is branched to the determining (S2).

## Patentansprüche

1. Brennstoffzellensystem, umfassend:
Reformer 11, der zugeführte Luft und Gas zu Wasserstoffgas reformiert; Brennstoffzellenstapel 12, in dem eine Mehrzahl von Zellen gestapelt ist, wobei die Mehrzahl von Zellen jeweils ein Paar aus Anode und Kathode beinhaltet; ein Wechselrichter 13, der Gleichstrom in Wechselstrom umwandelt; eine Systemsteuerung 24, die das gesamte Brennstoffzellensystem 20 steuert; ein Netz 15, das den im Wechselrichter 13 umgewandelten Wechselstrom nach außen abgibt; eine Ladung 16, die den im Wechselrichter 13 umgewandelten Wechselstrom direkt erhält und verbraucht; eine Mensch-Maschine-Schnittstelle (MMI) 17, die eine mit der Systemsteuerung 24 verbundene Schnittstelle ist und eine Einstellung von einem Benutzer empfängt; eine Eingangsspannungs-Erfassungseinrichtung 234 zum Erfassen eines Pegels der Eingangsspannung, die von der Brennstoffzelle 12 an den Wechselrichter übertragen wird; und eine Eingangsstrom-Erfassungseinrichtung 235 zum Erfassen eines Pegels des Eingangsstroms an den Wechselrichter, wobei der Wechselrichter eine Konvertersteuerung darin beinhaltet, und die Systemsteuerung das Brennstoffzellensystem steuert, und die Konvertersteuerung die Wechselrichtersteuerkomponenten steuert, die in untergeordneter Beziehung dazu stehen, miteinander verbunden sind und mehrere Parameterdaten einschließlich Ein/Aus, eine Temperatur, Gas und Luft teilen, wobei die Systemsteuerung eine Steuerung basierend auf einem Zustand des Wechselrichters durchführt, und die Konvertersteuerung eine Steuerung basierend auf einem Zustand des Brennstoffzellensystems durchführt.

2. Verfahren zur Steuerung des Eingangs eines Wechselrichters und einer Brennstoffzelle durch Einsatz eines Reformers 11, der zugeführte(s) Luft und Gas zu Wasserstoffgas reformiert; ein Brennstoffzellenstapel 12, in dem eine Mehrzahl von Zellen gestapelt ist, wobei die Mehrzahl von Zellen jeweils ein Paar aus Anode und Kathode beinhaltet; ein Wechselrichter 13, der Gleichstrom in Wechselstrom umwandelt; eine Systemsteuerung 24, die das gesamte Brennstoffzellensystem 20 steuert; ein Netz 15, das den im Wechselrichter 13 umgewandelten Wechselstrom nach außen abgibt; eine Ladung 16, die den im Wechselrichter 13 umgewandelten Wechselstrom direkt erhält und verbraucht; eine Mensch-Maschine-Schnittstelle (MMI) 17, die eine mit der Systemsteuerung 24 verbundene Schnittstelle ist und eine Einstellung von einem Benutzer empfängt; eine Eingangsspannungs-Erfassungseinrichtung 234 zum Erfassen eines Pegels der Eingangsspannung, die von der Brennstoffzelle 12 an den Wechselrichter übertragen wird; und eine Eingangsstrom-Erfassungseinrichtung 235 zum Erfassen eines Pegels des Eingangsstroms an den Wechselrichter, wobei das Verfahren Folgendes umfasst:
Übertragen eines Steuerbefehls durch die Systemsteuerung an den Wechselrichter basierend auf Wechselrichter Ein/Aus, einer Temperatur, Zeitparametern (S1); Bestimmen, ob der Wechselrichter eingeschaltet ist (S2); Bestimmen, ob eine Temperatur in einem Temperaturbereich zwischen Mindest- und Höchsttemperaturen liegt, wenn sich der Wechselrichter in eingeschaltetem Zustand befindet (S3); Normalbetrieb des Wechselrichters, wenn der Wechselrichter eingeschaltet ist und die Temperatur im Temperaturbereich zwischen der Mindest- und Höchsttemperatur (S4) liegt; Bestimmen, ob die Spannung in einem normalen Bereich (S5) liegt; Bestimmen, ob der Strom in einem normalen Bereich (S6) liegt; Normalbetrieb des Wechselrichters, wenn die Spannung und der Strom normal sind (S7); und Bestimmen, ob mehrere Parameter einschließlich Luft, Gas und eine Temperatur in einem normalen Bereich (S8) liegen.

3. Verfahren nach Anspruch 2, das ferner Folgendes umfasst:
Bestimmen, ob die Temperatur in einem Normalbereich liegt, wenn sich der Wechselrichter im ausgeschalteten Zustand der Bestimmung befindet (S2) (S9);
Anzeigen eines Spannungsfehlers an einem Bildschirm, wenn die Spannung nicht im Normalbereich der Bestimmung (S5) (S10) liegt;
Anzeigen eines aktuellen Fehlers am Bildschirm, wenn der Strom nicht im Normalbereich der Bestimmung (S6) (S11) liegt; und
Anzeigen eines Parameterfehlers am Bildschirm, wenn die Parameter nicht im Normalbereich der Bestimmung (S8) (S12) liegen.

4. Verfahren nach Anspruch 3, das ferner Folgendes umfasst:
Stoppen des Wechselrichters, wenn die Temperatur nicht im Normalbereich der Bestimmung (S9) (S13) liegt; und
Versetzen des Wechselrichters in einen Standby-Zustand, wenn die Temperatur im Normalbereich der Bestimmung (S9) liegt, oder wenn die Temperatur nicht im Normalbereich der Bestimmung (S3) (S14) liegt.

5. Verfahren nach Anspruch 4, das ferner Folgendes umfasst:
Überprüfen eines Zustands des Wechselrichters, wenn die Temperatur nicht im Normalbereich der Bestimmung (S9) oder nach dem Eintritt (S14) (S15) liegt; und
periodisches Überprüfen des Zustands des Wechselrichters nach der Überprüfung (S15) (S16), wobei der Prüfschritt (S16) zur Bestimmung (S2) verzweigt ist.

## Revendications

1. Système de pile à combustible comprenant :
un reformeur 11 reformant l'air et le gaz qui lui sont fournis en hydrogène gazeux ; un assemblage de piles à combustible 12 dans lequel une pluralité de piles sont assemblées, la pluralité de piles comprenant une paire d'anode et de cathode, respectivement ; un onduleur 13 convertissant un courant continu en courant alternatif ; un contrôleur système 24 commandant l'ensemble du système de pile à combustible 20 ; une grille 15 délivrant en sortie le courant alternatif converti dans l'onduleur 13 vers l'extérieur ; une charge 16 recevant et consommant directement le courant alternatif converti dans l'onduleur 13 ; une interface homme-machine (MMI) 17 qui est une interface connectée au contrôleur système 24 pour recevoir un réglage provenant d'un utilisateur ; un moyen de détection de tension d'entrée 234 pour détecter un niveau de la tension d'entrée transférée de l'assemblage de piles à combustible 12 vers l'onduleur ; et un moyen de détection de courant d'entrée 235 pour détecter un niveau de courant d'entrée vers l'onduleur, dans lequel l'onduleur comprend en son sein un contrôleur convertisseur, et le contrôleur système commandant le système de pile à combustible et le contrôleur convertisseur commandant les composants de commande d'onduleur qui ont une relation subordonnée avec celui-ci, respectivement, sont connectés l'un à l'autre et partagent de multiples informations de paramètres dont la marche/l'arrêt, une température, le gaz et l'air, le contrôleur système effectuant une commande sur la base d'un état de l'onduleur et le contrôleur convertisseur effectuant une commande sur la base d'un état du système de pile à combustible.

2. Procédé de commande de l'entrée d'un onduleur et d'une pile à combustible utilisant un reformeur 11 reformant l'air et le gaz qui lui sont fournis en hydrogène gazeux, un assemblage de piles à combustible 12 dans lequel une pluralité de piles sont assemblées, la pluralité de piles comprenant une paire d'anode et de cathode, respectivement, un onduleur 13 convertissant un courant continu en courant alternatif, un contrôleur système 24 commandant l'ensemble du système de pile à combustible 20, une grille 15 délivrant en sortie le courant alternatif converti dans l'onduleur 13 vers l'extérieur, une charge 16 recevant et consommant directement le courant alternatif converti dans l'onduleur 13, une interface homme-machine (MMI) 17 qui est une interface connectée au contrôleur système 24 pour recevoir un réglage d'un utilisateur, un moyen de détection de tension d'entrée 234 pour détecter un niveau de la tension d'entrée transférée de l'assemblage de piles à combustible 12 vers l'onduleur, et un moyen de détection de courant d'entrée 235 pour détecter un niveau de courant d'entrée vers l'onduleur, le procédé comprenant les étapes suivantes :
transférer, par le contrôleur système, une instruction de commande à l'onduleur sur la base de paramètres de marche/d'arrêt, de température, de temps de l'onduleur (S1) ; déterminer si l'onduleur est en marche (S2) ; déterminer si une température est dans une plage de température entre des températures minimale et maximale lorsque l'onduleur est dans un état de marche (S3) ; faire fonctionner normalement l'onduleur lorsque l'onduleur est en marche et que la température est dans la plage de température entre les températures minimale et maximale (S4) ; déterminer si la tension est dans une plage normale (S5) ; déterminer si le courant est dans une plage normale (S6) ; faire fonctionner normalement l'onduleur lorsque la tension et le courant sont normaux (S7) ; et déterminer si de multiples paramètres dont l'air, le gaz et une température sont dans une plage normale (S8).

3. Procédé selon la revendication 2, comprenant en outre les étapes suivantes :
déterminer si la température est dans une plage normale lorsque l'onduleur est dans un état d'arrêt lors de la détermination (S2) (S9) ;
afficher une erreur de tension sur un écran lorsque la tension n'est pas dans la plage normale lors de la détermination (S5) (S10) ;
afficher une erreur de courant sur l'écran lorsque le courant n'est pas dans la plage normale lors de la détermination (S6) (S11) ; et
afficher une erreur de paramètre sur l'écran lorsque les paramètres ne sont pas dans la plage normale lors de la détermination (S8) (S12).

4. Procédé selon la revendication 3, comprenant en outre les étapes suivantes :
arrêter l'onduleur lorsque la température n'est pas dans la plage normale lors de la détermination (S9) (S13) ; et
faire entrer l'onduleur dans un état de veille lorsque la température est dans la plage normale lors de la détermination (S9) ou lorsque la température n'est pas dans la plage normale lors de la détermination (S3) (S14).

5. Procédé selon la revendication 4, comprenant en outre les étapes suivantes :
vérifier un état de l'onduleur lorsque la température n'est pas dans la plage normale lors de la détermination (S9) ou après l'entrée (S14) (S15) ; et
vérifier, périodiquement, l'état de l'onduleur après la vérification (S15) (S16), dans lequel l'étape de vérification (S16) est ramifiée avec la détermination (S2).
